# EUROPÄISCHE PATENTSCHRIFT

(11) **EP 0 770 238 B1**
(45) Veröffentlichungstag und Bekanntmachung des Hinweises auf die Patenterteilung: **27.05.1998**
(21) Anmeldenummer: 95923194.5
(22) Anmeldetag: 03.07.1995
(51) Int. Cl.: G06F 1/16

(54) **MODULAR AUFGEBAUTE UND ERWEITERBARE ELEKTRONISCHE ARBEITSFLÄCHE**
MODULAR AND EXTENDIBLE ELECTRONIC WORKING SURFACE
SURFACE DE TRAVAIL ELECTRONIQUE MODULAIRE ET EXTENSIBLE

(30) Priorität: 08.07.1994 DE 4424138
(43) Veröffentlichungstag der Anmeldung: 02.05.1997
(73) Patentinhaber: SIEMENS AKTIENGESELLSCHAFT, 80333 München (DE)
(72) Erfinder: LATOCHA, Wanda, D-81739 München (DE); KARLS, Ingolf, D-85622 Feldkirchen (DE)
(86) Internationale Anmeldenummer: DE9500856
(87) Internationale Veröffentlichungsnummer: WO9602030

(56) Entgegenhaltungen:
- EP-A- 0 251 492
- EP-A- 0 378 889
- DE-A- 3 511 353
- DE-A- 4 218 179
- US-A- 4 769 764

## Beschreibung

Trotz der zunehmenden Verbreitung von Personal Computern sind die Anwendungs- und Einsatzmöglichkeiten dieser Produkte begrenzt. Noch immer ist der Umgang mit herkömmlichen Arbeitsmitteln wie "Papier und Bleistift" in vielen Fällen einfacher, intuitiver und effizienter. Mancher Anwender wünscht sich einen universell einsetzbaren mobilen Personal Computer, dessen Benutzung so einfach und intuitiv ist wie die Benutzung von "Papier und Bleistift", wobei jedoch die Funktionalität herkömmlicher Personal Computer möglichst uneingeschränkt verfügbar sein soll.

Die Erfindung betrifft eine Modular aufgebaute und erweiterbare elektronische Arbeitsfläche, die diesem Bedürfnis entsprechen soll.

Aus der US-Patentschrift 4,720,781 (Crossland et al.) ist eine Datenverarbeitungseinrichtung mit Flachbildschirm auf der Grundlage von Flüssigkristallanzeigen bekannt, wobei der Flachbildschirm von der Haupteinheit abnehmbar und mit eigenem Prozessor, Speicher sowie eigener Steuerung und Energieversorgung ausgestattet ist. Aus der deutschen Patentschrift DE 3700765 C2 ist eine Anzeigevorrichtung zur statischen und dynamischen Darstellung einer Information auf einem matrixförmig angeordneten, lichtemittierende Elemente aufweisenen Anzeigefeld mit Anzeigespalten und -zeilen bekannt, das sich aus aneinandergereihten, mechanisch und elektrisch verbindbaren Baueinheiten zusammensetzt, und mit einer programmierbaren elektronischen Steuerschaltung ausgestattet ist. Aus der deutschen Offenlegungsschrift DE 42 44 584 A1 ist ein Verfahren und eine Anordnung zur Vernetzung von elektro-optischen Bildwandmodulen mit Hilfe optischer Bussysteme bekannt.

Diese bekannten Gegenstände sowie andere herkömmliche Geräte mit dieser Zielrichtung, die "Notebooks", "Personal Digital Assistants" oder "Pen Computer", mit oder dine "Touch-Screen", haben gegenüber der Benutzung von "Papier und Bleistift" u. a. den Nachteil, daß der zur Verfügung stehende Arbeitsbereich (Arbeitsfläche) begrenzt und vom Hersteller des Gerätes fest vorgegeben ist, oder daß sie nicht folgende Eigenschaften kombinieren:
- flexible Anordnung und Größe der Bildschirme,
- sensitive Oberflächen, d.h. Eingabefunktionalitäten direkt auf dem Bildschirm,
- Mobilität (leicht tragbar, ohne Netzanschluß nutzbar).

Ferner sind herkömmliche Personal Computer durch eine fest begrenzte Bildschirmgröße und durch eine strikt zweidimensionale Darstellungsoberfläche gekennzeichnet.

Der Erfindung liegt die Aufgabe zugrunde, eine elektronische Arbeitsfläche mit sensitiver Oberfläche anzugeben, bei der die Anordnung und Größe der Arbeitsfläche an den Nutzungszweck angepaßt werden können. Diese Aufgabe wird erfindungsgemäß durch eine Modular aufgebaute und erweiterbare elektronische Arbeitsfläche mit Merkmalen nach Anspruch 1 gelöst.

Danach besteht die Arbeitsfläche aus einem oder mehreren Grundelementen, die zusammengesteckt sind, so daß durch Hinzufügung weiterer Grundelemente oder durch Wegnahme von Grundelementen die Arbeitsfläche vergrößert, verkleinert oder geteilt werden kann. Die Oberfläche eines Grundelements ist als sensitiver Flachbildschirm (Flat-Panel-Display) ausgestaltet, mit dem Daten angezeigt und über welchen auch Daten in die Arbeitsfläche eingegeben werden können. Die Seitenflächen eines Grundelements sind mit Einrichtungen versehen, die das reversible Zusammenstecken der Grundelemente und einen Austausch von Daten zwischen den Grundelementen ermöglichen.

Die DE-A-42 18 179 beschreibt eine Ausgabeeinrichtung für einen PC, die es erlaubt, auf mehreren steckbaren LCD-Anzeigen gleichzeitig verschiedene Texte bzw. Graphiken darzustellen oder aber einen Text über mehrere LCD-Anzeigen auszudehnen. Die LCD-Anzeigen können mit Sensoren versehen sein (sogenannte Touch-Screen) zur Steuerung der Anzeige, d.h. blättern etc. Alle LCD-Anzeigen werden von einem einzigen zentralen Prozessor des PCs angesteuert, auf dem das Anwendungsprogramm läuft. Die LCD-Anzeign sind zwar ihrerseits ebenfalls mit Prozessor und Speicher ausgestattet, um eine vom PC und den anderen LCD-Anzeigen unabhängige Anzeige zu realisieren; Anwendungsprogramme können auf diesen Prozessoren jedoch nicht ablaufen.

Die Erfindung ermöglicht damit dem Anwender eine Benutzung in Anlehnung an die "Papier und Bleistift"-Metapher. Im Gegensatz zu herkömmlichem sogenannten "elektronischen Papier" (siehe [Wei 91]), welches aus einem einzelnen Flat-Panel-Diplay besteht, welches zwar drahtlos mit anderen Datenverarbeitungseinrichtungen kommuniziert, dessen Größe und Form aber fest vorgegeben ist, ermöglicht die Erfindung dem Benutzer das Arbeiten auf einer flexibel anzuordnenden und in der Größe zu variierenden Fläche mit einheitlichen Eigenschaften.

Vorteilhafte Weiterbildungen der Erfindung ergeben sich aus den Unteransprüchen.

Bei einer bevorzugten Ausführungsform der Erfindung ist die Ausrüstung eines Grundelements oder mehrerer Grundelemente mit einem Prozessor vorgesehen. Diese Ausführungsform der Erfindung ermöglicht den Ablauf geeigneter Software auf dem Prozessor, wodurch die Kommunikation der Arbeitsfläche mit dem Anwender sowie das Verhalten der Arbeitsfläche aus Anwendersicht verbessert werden kann. Die Software könnte z. B. das Zeichnen geometrischer Figuren unterstützen oder die Handschrift des Benutzers erkennen und automatisch in typisierte Schriftzeichen umwandeln.

Noch flexibler ist eine weitere bevorzugte Ausführungsform der Erfindung, bei der ein Datenspeicher in wenigstens einem Grundelement vorgesehen ist. Bei dieser Ausführungsform der Erfindung ist das Abspeichern von Anwenderdaten ohne Anschluß an externe Speichermedien möglich. Ferner können vom Anwender weitere Programme geladen werden, welche die Arbeitsfläche mit einer erweiterten Funktionalität ausstatten.

Weitere bevorzugte Ausführungsformen der erfindungsgemäßen Arbeitsfläche sehen Grundelemente mit Einrichtungen zur Datenübertragung bzw. Übernahme an externe weitere Datenverarbeitungsgeräte oder Peripheriegeräte oder zur Kommunikation mit anderen Computern über Datenkommunikationsnetze vor. Durch diese Maßnahmen wird die erfindungsgemäße Arbeitsfläche zu einem variablen Endgerät für Informationsnetze. Ferner wird die Ausgabe von Daten auf externe Peripheriegeräte wie z. B. Drucker oder die Übernahme von Daten von weiteren Datenverarbeitungssystemen möglich.

Bei einer weiteren bevorzugten Ausführungsform der Erfindung ist die mechanische Verbindung zwischen den Grundelementen so ausgestaltet, daß der Winkel zwischen zwei Grundelementen verändert werden kann. Diese Maßnahme ermöglicht eine äußerst flexible Handhabung der erfindungsgemäßen Arbeitsfläche, wie z. B. das Zusammenklappen einer Arbeitsfläche zur Erleichterung ihres Transports, oder den Aufbau dreidimensionaler Konstruktionen wie z. B. Kabinen oder Präsentationswänden.

Bei einer weiteren bevorzugten Ausführungsform der Erfindung ist die Ausstattung wenigstens eines Grundelements mit der Basisfunktionalität eines Personalcomputers vorgesehen. Neben einem Prozessor und einem Arbeitsspeicher ist hierbei demnach wenigstens ein Grundelement mit einer Betriebssystemsoftware ausgerüstet, die das Öffnen und Speichern von Dateien, das Aufrufen von Programmen und die Ein-/Ausgabe in bzw. von Dateien erlaubt. Eine derartige Arbeitsfläche ist ein vollständiger Ersatz für einen Personalcomputer mit dem Vorteil der flexiblen Anordnung und Wahl der Größe der Ein-/Ausgabefläche. Sind wenigstens zwei Grundelemente als PC ausgerüstet, so kann der Benutzer nach seiner Wahl diese PC getrennt oder in Zusammenarbeit benutzen wobei sich beide Grundelemente zusammen wie ein Personal Computer verhalten können. Auf diesen Arbeitsflächen können dann eine Anwendung oder mehrere Anwendungen gleichzeitig laufen, wobei nach Wahl des Benutzers oder mehrerer Benutzer diese Anwendungen von mehreren Benutzern gemeinsam oder getrennt benutzt werden können. Ferner kann nach Wahl des Benutzers oder der Benutzer die gesamte Arbeitsfläche auf alle Anwendungen verteilt werden; alternativ dazu können verschiedene Anwendungen in verschiedenen Bereichen der gesamten Arbeitsfläche ablaufen.

Figur 1 zeigt in schematischer Weise verschiedene Beispiele erfindungsgemäßer elektronischer Arbeitsflächen mit unterschiedlichen Zusammensetzungen aus Grundelementen.

Figur 2 zeigt in schematischer Weise verschiedene Beispiele von Grundelementen für die erfindungsgemäße elektronische Arbeitsfläche.

Figur 3 zeigt in schematischer Weise eine mögliche Ausführungsform der Einrichtung zum Zusammenstecken der Grundelemente.

Im folgenden wird die Erfindung anhand bevorzugter Ausführungsbeispiele und mit Hilfe der Figuren näher beschrieben.

Im Zuge des Ausbaus von Informationsnetzen brauchen die Anwender ein flexibles Endgerät, welches auch bei unterschiedlichen Nutzungen komfortable Arbeitsmöglichkeiten bietet. Von einem derartigen flexiblen Endgerät erwartet man folgende Eigenschaften:
- Anpassung von Anordnung und Größe der Arbeitsfläche an den Nutzungszweck und nicht umgekehrt,
- Mobilität und Anpassung des Gerätes an unterschiedliche Arbeitsplätze, sowie
- unterschiedliche Ausbaustufen für verschiedene Nutzerkreise und Anwendungen.

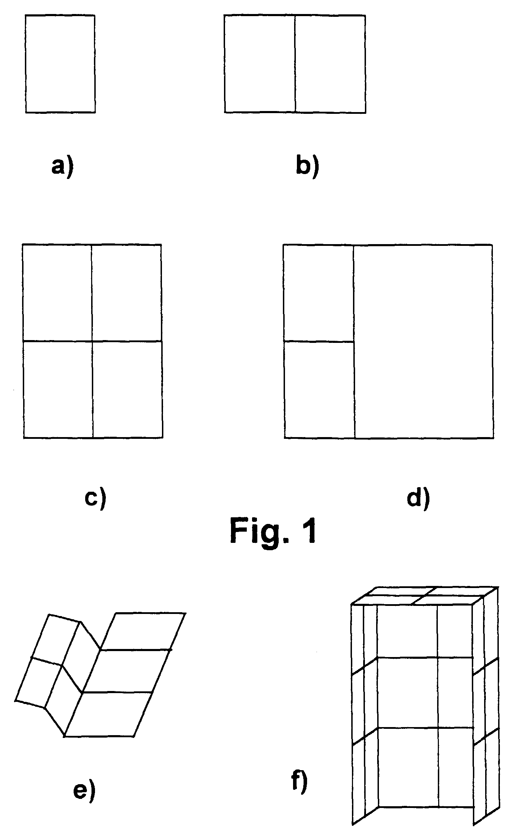

Die Erfindung verfolgt u.a. das Ziel, ein flexibles Endgerät für Informationsnetze mit den oben skizzierten Eigenschaften bereitzustellen. Dieses Gerät soll natürlich auch ohne Netzanschluß sinnvoll und nutzbringend verwendbar sein, z.B. als Notebook, PDA, oder PC. Das erfindungsgemäße Gerät besteht aus einem Baukastensystem von flächen- oder tafelförmigen Grundelementen, die als sensitive Flat-Panel-Displays, vorzugsweise mit Personal Computer Funktionalitäten und Kommunikationsfähigkeiten, ausgestatten sind. Die flächenförmigen Grundelemente können dabei in unterschiedlichen Größen existieren. Dies ist schematisch in Figur 1, insbesondere in den Figuren la, b, c und d dargestellt. Sie lassen sich flexibel zusammensetzen - in einer Ebene oder in unterschiedlichen Winkeln (Figur 1e,f). Jedes Grundelement ist allein oder im Verbund mit anderen Grundelementen verwendbar. Dabei kann man sowohl verschiedene Anwendungen auf einer Arbeitsfläche parallel benutzen (z. B. wie ein Window-System), als auch einzelne Anwendungen über mehrere Grundelemente ausdehnen. Die erfindungsgemäße Arbeitsfläche ist mobil, d. h. die Grundelemente lassen sich einzeln oder zusammengeklappt transportieren und auch zusammengeklappt nutzen.

Aufgrund dieser flexiblen Eigenschaften der Grundelemente ist die erfindungsgemäße Arbeitsfläche ein Gerät, das vielen Zielgruppen und Anwendungen gerecht wird. Besonders geeignet ist es für Nutzungen, die den flexiblen Einsatz von Arbeitsflächen (hinsichtlich Größe, Anordnung oder Verwendungsort) oder sehr große Präsentationsflächen benötigen. Im folgenden sind beispielhaft einige mögliche Nutzungsformen aufgezählt:
- Arbeitsplätze, bei denen das gleiche Gerät zum Arbeiten am Arbeitstisch und zum Präsentieren verwendet wird.
- Arbeitsplätze, bei denen sich mehrere Personen ein solches Gerät teilen, d. h. bei Bedarf an ihren Arbeitsplatz holen.
- Große, flexibel nutzbare Präsentationsflächen in Leitwarten.
- Große Präsentationsflächen in Konferenzräumen.
- Kabinen in Spielhallen zur Darstellung virtueller Welten.
- Displays für Flugsimulatoren.
- Eine kleine Arbeitsfläche für jedes Familienmitglied; diese Arbeitsfläche ist in der Schule, am Arbeitstisch, im Sessel usw. benutzbar. Falls nur ein Familienmitglied mit der erfindungsgemäßen Arbeitsfläche arbeitet, kann es alle vorhandenen Grundelemente zu einer größeren Arbeitsfläche zusammenstecken.

In einer bevorzugten Ausführungsform stellt die erfindungsgemäße Arbeitsfläche Grundfunktionalitäten zur Verfügung, die mit speziellen Anwendungen für bestimmte Nutzergruppen ergänzt werden können. Mögliche Grundfunktionalitäten einer erfindungsgemäßen Arbeitsfläche sind:
- Die üblichen Funktionalitäten eines Personal Computers.
- Kommunikationsdienste, wie Telefon, Fax, E-Mail, ect.
- Anschluß an ein Informationsnetz (D-Netz, usw.) und seine Dienste (drahtlose und feste Verbindung).
- Multimediale und Multimodale Benutzeroberfläche.

Weitere Leistungsmerkmale des erfindungsgemäßen Gerätes ergeben sich aus seinem modularen Aufbau als Baukastensystem. Die Anordnung und Größe einer Arbeitsfläche läßt sich an den jeweiligen Nutzungszweck anpassen. Dies ist schon bei einfachen, alltäglichen Arbeiten interessant, z. B. wenn eine Sekretärin mehrere Seiten eines längeren Textes gleichzeitig auf ihrem Bildschirm bearbeiten will. Das Gerät ist mobil, d. h. an verschiedenen Orten einsetzbar. Es genügt den Anforderungen unterschiedlicher Arbeitsplätze. Man kann es beispielsweise auf den Schreibtisch legen, zum Präsentieren an die Wand hängen, zu Hause im Sessel mit ihm Arbeiten, eine Kabine aus Arbeitsflächen herstellen, usw. Die Grundelemente der erfindungsgemäßen elektronischen Arbeitsfläche sind in zweckentsprechenden Größen käuflich und leicht zu erweitern. Dies entspricht dem Bedürfnis unterschiedlicher Anwendergruppen. So brauchen z. B. Privatpersonen normalerweise nur wenige, kleine Arbeitsflächen wogegen in Konferenzräumen von Firmen häufig große wandbedeckende Arbeitsflächen benötigt werden. Schließlich benötigen Informationsstudios Kabinen aus Arbeitsflächen, ect.

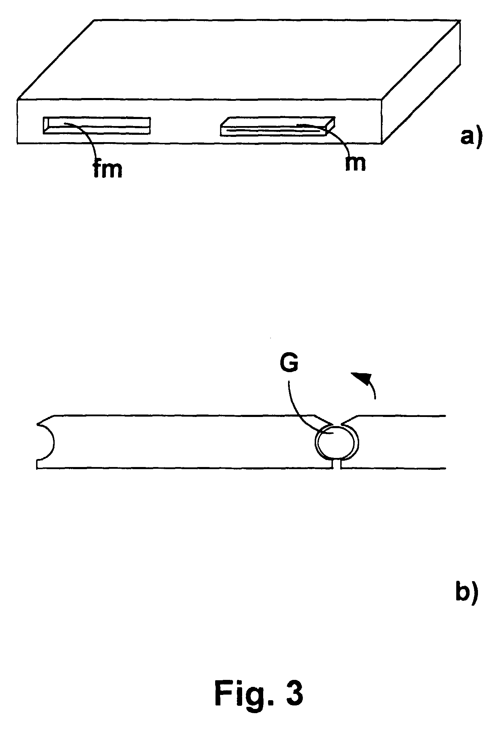

Die erfindungsgemäße Arbeitsfläche gleicht einem Baukastensystem mit der Möglichkeit des flexiblen Aneinanderkoppelns beliebig vieler im wesentlichen gleichartiger Grundelemente. Die Kopplung beinhaltet dabei sowohl eine feste aber jederzeit lösbare mechanische Verbindung (siehe Figur 3) als auch die Möglichkeit des Energie- und Datenaustausches. In Figur 3 sind beispielhaft zwei mögliche Ausführungsformen der mechanischen Kopplung der Grundelemente schematisch dargestellt. Figur 3a zeigt eine Seitenansicht eines im wesentlichen quaderförmigen Grundelementes, dessen Seitenflächen mit männlichen (m) und weiblichen (fm) Steckvorrichtungen ausgestattet sind, die beim Zusammenstecken der Grundelemente ineinandergreifen, und so eine elektrische und mechanische Verbindung zwischen den Grundelemente herstellen. Figur 3b zeigt eine Seitenansicht zweier mit Hilfe eines im wesentlichen zylinderförmigen Verbindungselements (G) verbundenen Grundelemente. Jeweils eine Hälfte des Verbindungselements - d.h. jeweils ein Teilzylinder halber Länge - ist mit jeweils einem Grundelement zusammengesteckt - z.B. mit Hilfe von Steckvorrichtungen gem. Figur 3a. Da die beiden Teilzylinder gegeneinander um eine gemeinsame Achse verdrehbar sind, läßt sich der Winkel zwischen den Grundelementen, wie in Figur 3b angedeutet, verändern. Da derartige Verbindungskonstruktionen im Bereich der Datenverarbeitung prinzipiell aus anderen Anwendungen (z.B. Kabelsteckverbindungen, Steckkarten, Verbindung von Monitor und Tastatur beim Notebook, etc.) bekannt sind, bereitet es dem Fachmann nach der Lektüre dieser vorliegenden Patentanmeldung keine Schwierigkeiten mehr, diese an sich bekannten Konstruktionen nun im Sinne der vorliegenden Erfindung unter Zuhilfenahme der Figuren anzuwenden. Eine ausführlichere Darstellung dieser Technik im Rahmen der vorliegenden Anmeldung kann daher mit Rücksicht auf die gebotene Übersichtlichkeit der vorliegenden Ausführungen unterbleiben.

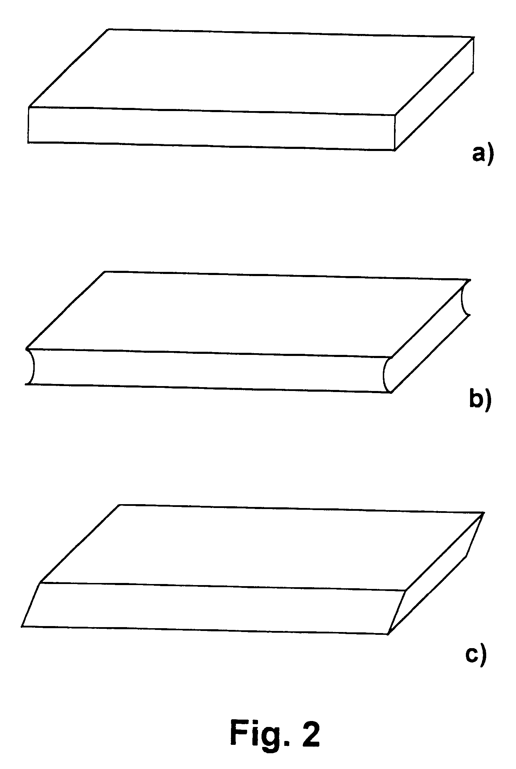

Die Grundelemente sind dabei typischerweise prismenförmige oder tafel- bzw. scheiben- oder plattenförmige Geräte (vgl. Fig. 2), welche ein sensitives Flat-Panel-Display (Bildschirm mit Eingabefunktionalität) und eine zugehörige Rechnereinheit oder gar mehrere Rechnereinheiten (Prozessoren etc.) integrieren. Die Grundelemente müssen dabei nicht in der strikten Bedeutung des Wortes "prismenförmig" sein, obwohl dies häufig der Fall sein wird. Als Grundelement eignet sich vielmehr jeder dreidimensionale Körper, der eine Oberfläche besitzt, die zum Anzeigen und Eingeben von Daten verwendet werden kann, und welcher Seitenflächen besitzt, die die mechanische und elektronische Kopplung mehrerer Grundelemente zu einer größeren Arbeitsfläche erlauben. Es ist dem Fachmann anhand dieser Schiiderungen klar, daß die Oberfläche von Grundelementen auch gewölbt sein kann, daß ferner die parallelen oder nur näherungsweise parallelen Grundflächen von Grundelementen nicht unbedingt genau deckungsgleich sein müssen, und daß die Seitenflächen nicht notwendig eben sein müssen, sondern auch gewölbt sein können; dem Fachmann ist anhand dieser Schilderungen klar, daß die entscheidende Eigenschaft der Grundelemente ihre Beschreibbarkeit - z. B. mit einem hierfür geeigneten Dateneingabestift - und ihre Zusammensetzbarkeit zu einer flexiblen Arbeitsfläche ist.

Ein weiteres wichtiges Merkmal der erfindungsgemäßen Arbeitsfläche ist die flexible Größe und Anordnung der Bildschirmoberfläche. Ähnlich wie bei dem Verwenden von Papier, das ohne weiteres zu größeren Flächen zusammengesetzt werden kann oder in kleinere Flächen unterteilt werden kann, hat der Benutzer die Möglichkeit, verschiedene Grundelemente ganz nach seiner Wahl zu einem größeren Bildschirm zusammenzusetzen, der nicht unbedingt die Form einer flachen Ebene haben muß, sondern wie bereits erwähnt, zusammenklappbar oder als Kabine aufstellbar angeordnet sein kann. Schließlich ist eine wesentliche Eigenschaft der erfindungsgemäßen Arbeitsfläche ihre Mobilität, welche sich aus dem geringen Gewicht der Grundelemente und ihrer Unabhängigkeit von einem Netzanschluß ergibt, wobei diese Unabhängigkeit z. B. durch Verwendung von Batterien, Akkumulatoren oder fotovoltaischen Elementen erreicht werden kann.

Von herkömmlichen Bildschirmwänden unterscheidet sich die erfindungsgemäße Arbeitsfläche durch die Kopplung der einzelnen Grundelemente (Bildschirmelemente) untereinander, ohne daß eine Zentraleinheit benötigt würde, durch die flexible Anordnung der Bildschirmflächen und durch den direkten Datenaustausch zwischen den Grundelementen. Dem gegenüber wird bei herkömmlichen Bildschirmelementen eine Zentraleinheit zur Ansteuerung aller Bildschirme benötigt; die Bildschirme tauschen untereinander keine Daten aus. Normalerweise sind die Bildschirme einer Bildschirmwand nicht flexibel anzuordnen.

Von herkömmlichen Notebooks oder Notepadcomputern unterscheidet sich die erfindungsgemäße Arbeitsfläche dadurch, daß bei der erfindungsgemäßen Arbeitsfläche gleichartige Grundelemente in unbeschränkter Zahl aneinander gekoppelt werden können, wogegen bei herkömmlichen Notepads und Notebooks eine derartige Kopplung nicht vorgesehen ist. Zwar können einige handelsübliche Notepadcomputer über Kabel oder Infrarotverbindungen miteinander kommunizieren; diese Kommunikation erlaubt dem Anwender aber nicht den Aufbau einer einzigen größeren homogenen Arbeitsfläche aus einzelnen Notepadcomputern.

Das von [Wei 91] beschriebene elektronische Papier unterscheidet sich schließlich von der erfindungsgemäßen Arbeitsfläche dadurch, das die erfindungsgemäße Arbeitsfläche einen modularen Aufbau besitzt und kein einzelnes Gerät mit fester Anordnung und Größe des Bildschirms darstellt.

Sensitive Flachbildschirme, auch sensitive Flat-Panel-Displays genannt, sind dem Fachmann aus der Literatur [Ste 93] bekannt. Sie ermöglichen eine direkte Eingabe von Daten, typisch in grafisch intuitiver Weise, auf dem Bildschirm. Sensitive Flachbildschirme sind also zugleich Ein- und Ausgabemedien. Eingaben erfolgen u.a. mit direkten oder indirekten Zeige-/Eingabegeräten. Beispiele für direkte Zeige-/Eingabegeräte sind der sogenannte Touchscreen, der Lichtgriffel (lightpen) oder der Stift (pen). Für die Zeige-/Eingabegeräte ist charakteristisch, daß bei ihnen die Interaktion direkt auf dem Display erfolgt. Bei den indirekten Zeige-/Eingabegeräten erfolgt die Eingabe nicht direkt auf dem Bildschirm. Obwohl der Bildschirm hier nicht das Eingabemedium ist, können auch indirekte Zeige-/Eingabegeräte sinnvoll zusammen mit sensitiven Flachbildschirmen verwendet werden. Bekannte Beispiele für indirekte Zeige-/Eingabegeräte sind Tastatur, Maus, 3D-Maus, Rollkugel (Trackball), Joystick, Graphiktablett und Touchpad.

Die Verwendung von direkten Zeige-/Eingabegeräten steht im Zusammenhang mit der erfindungsgemäßen Arbeitsfläche wegen ihrer sensitiven Flachbildschirme naturgemäß im Vordergrund. Trotzdem ist es in vielen Fällen sinnvoll, indirekte Zeige-/Eingabegeräte als Ergänzung zu den direkten Eingabegeräten zu verwenden.

Beispiele für heute übliche Flat-Panel-Displays sind Flüssigkristalldisplays (LCD), insbesondere Aktiv-Matrix-LCD-Panels, Plasmadisplays (PDP) und Elektroluminiszenzdisplays (ELD). Die erfindungsgemäße elektronische Arbeitsfläche kann mit diesen herkömmlichen Displays hergestellt werden. Es liegt im Ermessen des Fachmanns, in Zukunft andere Flat-Panel-Displays einzusetzen, die möglicherweise auf anderen Technologien beruhen.

Die erfindungsgemäße elektronische Arbeitsfläche eignet sich für eine Reihe von Benutzerschnittstellen-Methaphern. Die wichtigsten dieser Metaphern sind
- die Desktop-Methapher, die praktisch allen heute üblichen graphischen Benutzeroberflächen für Personal Computer, wie z.B. der von Apple (Macintosh), Microsoft (Windows), und anderen Herstellern zugrundeliegt; bei dieser Methapher wird der Eindruck einer Schreibtischoberfläche mit darauf befindlichen Objekten hervorgerufen;
- Räume als Benutzerschnittstellen; eine solche Methapher liegt z.B. Apples E-World genanntem Online-Informationsdienst oder dem System Magic Cap von General Magic [Mul 94], [Rad 94] zugrunde; diese Methapher läßt sich z.B. mit einem kabinenförmigen Aufbau der Arbeitsoberfläche verwirklichen;
- Cyberspace-Benutzerschnittstellen; diese dreidimensionalen Benutzerschnittstellen werden dem Anwender mit Hilfe von Datenhandschuhen oder sogenannten Head-Meounted-Displays vermittelt.

In dieser Patentanmeldung wurde auf die folgenden Veröffentlichungen Bezug genommen:
[Wei 91] Weiser, M.: The Computer for the 21st Century, Scientific American, Sept. 1991, pp. 66 - 75.
[Ste 93] Steven W.Depp; Webster E. Howard: Flat-Panel-Displays. Scientific American, März 1993, pp. 40 - 45.
[Rad 94] Mitch Radcliffe: Let Your Agent Do the Walking, Top of the News, PC World (56), Feb. 1994.
[Mul 94] Wolfgang Müller: Steigende Netzspannung, Öffentliche Netzwerke, SCREEN Multimedia, 3/94, pp. 20 - 23.

## Patentansprüche

1. Modular aufgebaute und erweiterbare elektronische Arbeitsfläche mit folgenden Merkmalen:
a) die Arbeitsfläche besteht aus mehreren Grundelementen, die zusammengesteckt sind;
b) durch Hinzufügen weiterer Grundelemente bzw. durch Wegnahme von Grundelementen kann die Arbeitsfläche vergrößert bzw. verkleinert oder geteilt werden;
c) die Oberfläche mindestens zweier Grundelemente sind als sensitiver Flachbildschirm ausgestaltet, mit dem Daten angezeigt und über welchen auch Daten in die Arbeitsfläche eingegeben werden können, wobei die mindestens zwei Grundelemente jeweils mindestens einen Prozessor aufweisen, mit dem Anwendungsprogramme verarbeitet werden können;
d) die Seitenflächen der Grundelemente sind mit Einrichtungen versehen, die das reversible Zusammenstecken der Grundelemente und einen Austausch von Daten zwischen den Grundelementen ermöglichen.
e) mindestens ein Teil der Grundelemente weist eine von anderen Grundelementen unabhängige Funktionalität auf und mindestens ein Teil der Grundelemente kann über die Einrichtungen Daten derart austauschen, daß eine gemeinsame Funktionalität der jeweiligen Grundelemente realisiert wird, wodurch auf unterschiedlichen Grundelementen gleichzeitig unterschiedliche Anwendungen laufen können, oder eine Anwendung über mehrere Grundelemente ausgedehnt werden kann.

2. Modular aufgebaute und erweiterbare elektronische Arbeitsfläche nach einem der vorhergehenden Ansprüche, bei der wenigstens ein Grundelement mit einem Datenspeicher zum Abspeichen der Anwenderdaten ausgerüstet ist.

3. Modular aufgebaute und erweiterbare elektronische Arbeitsfläche nach einem der vorhergehenden Ansprüche, bei der wenigstens ein Grundelement mit einer Einrichtung zur Datenübertragung an ein externes und/oder zur Datenübernahme von einem externen Datenverarbeitungsgerät und/oder Peripheriegerät und/oder Datenkommunikationsnetz ausgerüstet ist.

4. Modular aufgebaute und erweiterbare elektronische Arbeitsfläche nach einem der vorhergehenden Ansprüche, bei der wenigstens ein Grundelement so mit einem anderen Grundelement zusammensteckbar ist, daß der Winkel zwischen diesen beiden Grundelementen verändert werden kann.

## Claims

1. Modular and extendible electronic working surface having the following features:
a) the working surface comprises a plurality of basic elements which are plugged together;
b) the working surface can be enlarged or reduced or divided by the addition of further basic elements or by taking away basic elements;
c) the top surfaces of at least two basic elements are configured as a sensitive flat screen with which data can be displayed and via which data can also be input into the working surface, the at least two basic elements in each case having at least one processor with which application programs can be processed;
d) the side surfaces of the basic elements are provided with devices which make possible the reversible plugging together of the basic elements and an exchange of data between the basic elements;
e) at least some of the basic elements have a functionality which is independent of other basic elements, and at least some of the basic elements can exchange data via the devices in such a manner that a joint functionality of the respective basic elements is realized, as a result of which different applications can simultaneously run on different basic elements, or one application can be spread out over a plurality of basic elements.

2. Modular and extendible electronic working surface according to one of the preceding claims, in which at least one basic element is equipped with a data memory for storing the user data.

3. Modular and extendible electronic working surface as claimed in one of the preceding claims, in which at least one basic element is equipped with a device for data transmission to and/or for data acceptance from an external data processing device and/or peripheral device and/or data communications network.

4. Modular and extendible electronic working surface as claimed in one of the preceding claims, in which at least one basic element can be plugged together with another basic element in such a way that the angle between these two basic elements can be varied.

## Revendications

1. Surface de travail électronique modulaire et extensible, présentant les particularités suivantes :
a) la surface de travail est composée de plusieurs éléments de base qui sont assemblés les uns aux autres par emboîtement ;
b) par addition d'autres éléments de base ou par enlèvement d'éléments de base, on peut agrandir, réduire ou diviser la surface de travail ;
c) les surfaces d'au moins deux éléments de base sont réalisées sous la forme d'écrans plats sensitifs avec lesquels des données peuvent être affichées et au moyen desquels des données peuvent aussi être entrées dans la surface de travail, les - au moins deux - éléments de base présentant chacun au moins un processeur à l'aide duquel des programmes d'application peuvent être traités ;
d) les surfaces latérales des éléments de base sont munies de dispositifs qui permettent l'assemblage réversible des éléments de base par emboîtement et un échange de données entre les éléments de base ;
e) au moins certains des éléments de base présentent une fonctionnalité indépendante des autres éléments de base et au moins certains des éléments de base peuvent échanger des données à l'aide des dispositifs de telle manière qu'une fonctionnalité commune des éléments de base considérés soit réalisée, ce qui fait que plusieurs applications différentes peuvent se dérouler en même temps sur différents éléments de base ou qu'une application donnée peut être étalée sur plusieurs éléments de base.

2. Surface de travail électronique modulaire et extensible selon l'une des revendications précédentes, dans laquelle l'au moins un élément de base est équipé d'une mémoire de données pour mémoriser les données de l'utilisateur.

3. Surface de travail électronique modulaire et extensible selon l'une des revendications précédentes, dans laquelle l'au moins un élément de base est équipé d'un dispositif pour la transmission de données à un appareil informatique extérieur et/ou pour la prise en charge de données provenant d'un appareil informatique extérieur et/ou d'un périphérique et/ou d'un réseau de communication de données.

4. Surface de travail électronique modulaire et extensible selon l'une des revendications précédentes, dans laquelle au moins un élément de base peut être assemblé par emboîtement à un autre élément de base de telle manière que l'angle entre ces deux éléments de base puisse être modifié.
